**Europäisches Patentamt**

**European Patent Office**

**Office européen des brevets**

(11) Publication number: **0 018 114**

**A1**

(12) # EUROPEAN PATENT APPLICATION

(21) Application number: **80300982.8**

(22) Date of filing: **28.03.80**

(51) Int. Cl.³: **B 64 C 11/00**

(30) Priority: **03.04.79 GB 7911681**
**02.08.79 GB 7926900**

(43) Date of publication of application: **29.10.80**
**Bulletin 80/22**

(84) Designated Contracting States: **DE FR GB IT**

(71) Applicant: **The Secretary of State for Defence in Her Britannic Majesty's Government of The United Kingdom of Great Britain and, Northern Ireland Whitehall, London SW1A 2HB (GB)**

(72) Inventor: **Molyneux, Walter Guillam, 9 Orchard Close, Hawley Camberley, Surrey (GB)**

(74) Representative: **Lockwood, Peter Brian et al, Ministry of Defense Patents 1 A (4) Room 1932, 19th Floor Empress State Building Lillie Road, London SW6 1TR (GB)**

(54) **Thrust devices.**

㉗ A thrust device includes a rotor (13) with fan blades (14) and aerofoils (15) mounted on at least some of the fan blade tips, the aerofoil spanwise axes being parallel with the rotor axis. The aerofoil angles of attack may be variable either collectively or cyclically, the latter arrangement giving vectored thrust.

THRUST DEVICES

The present invention relates to thrust devices of the type having a rotor containing a plurality of fan blades and operating in a fluid.

In a thrust device of the above type the thrust is conventionally varied either by adjusting the rotational speed of the rotor or by varying the incidence of the fan blades (the angle made by the fan blade to the direction of fluid flow).

According to the present invention a thrust device includes a rotor rotatable about a rotor axis and having a plurality of fan blades at least some of which each carries at its tip an aerofoil having a spanwise axis substantially parallel to the rotor axis.

Whilst fan blades are themselves aerofoils, for convenience in this specification the word aerofoil will be used to denote only the tip mounted aerofoils.

Preferably each fan blade has an aerofoil at its tip.

Depending on whether the aerofoils provide a radial inflow or a radial outflow of fluid the effective catchment area of the rotor, the mass flow through the rotor, and the flow velocity will be respectively increased or decreased. Thus, with a radial inflow the rotor thrust will be increased and with a radial outflow the thrust will be decreased.

In one form of the invention the aerofoils are at a fixed incidence to provide an improved performance at a design operating condition.

In another form of the invention the aerofoils have collectively variable incidences, either to provide rotor thrust variation at constant rotational speed and fan blade incidence, or to act in conjunction with speed changes, fan blade incidence changes or both to increase the thrust range.

In yet another form of the invention the device provides vectored thrust, an example of the use of vectored thrust devices being on helicopters. It is well known that helicopters require anti torque devices to offset the torque set up by driving the rotors on which they depend for lift. Conventionally a rotor situated at the tail of the helicopter and providing a lateral force has been used for this purpose, although many other arrangements have been considered. The importance of anti torque devices increases as the helicopter speed decreases and usually conventional control surfaces, a rudder and a tailplane, are used to stabilise a helicopter in cruising flight. The need for a tail rotor with its associated drive mechanism (which usually involves a drive shaft from the main helicopter power plant, and associated gearing) is expensive in terms both of weight and of complication.

In this form of the invention the aerofoil incidences are cyclically as well as collectively variable.

The fan blades themselves may be of variable incidence. If the fan blades have variable incidence such that the thrust generated by them can be in either direction, suitable control of their incidence, and the incidences of the aerofoils, will enable the thrust vector to be in any desired direction. There are preferably more than two aerofoils symmetrically arrayed.

When used on a helicopter a vectored thrust device according to the invention is preferably situated at the tail of the helicopter with the fan rotor rotatable about the longitudinal axis of the helicopter. The device may be used with a conventional rudder and tailplane or by itself. The device may be manually controlled, but requires additional control functions to those normally required for a helicopter. An automatic control system may therefore be advantageous.

Some embodiments of the invention will now be described, by way of example only, with reference to the accompanying diagrammatic drawings, of which

Figure 1 is an end elevation of a rotor fan blade and aerofoil,

Figure 2 is a side elevation in section along line 2-2 of Figure 2.

4

Figures 3, 4 and 5 are respectively a side elevation, a plan and a front elevation of a helicopter having a vectored thrust device according to the invention,

Figure 6 is an elevation, in the direction of arrow X on Figure 3, of a vectored thrust control device,

Figure 7 is an elevation of a detail of a vectored thrust control device,

Figure 8 is a side elevation in section along the lines AA of Figure 7, and

Figures 9 and 10, 11 and 12, 13 and 14 and 15 and 16 are respectively end elevations and side elevations in section of details of further embodiments of the invention.

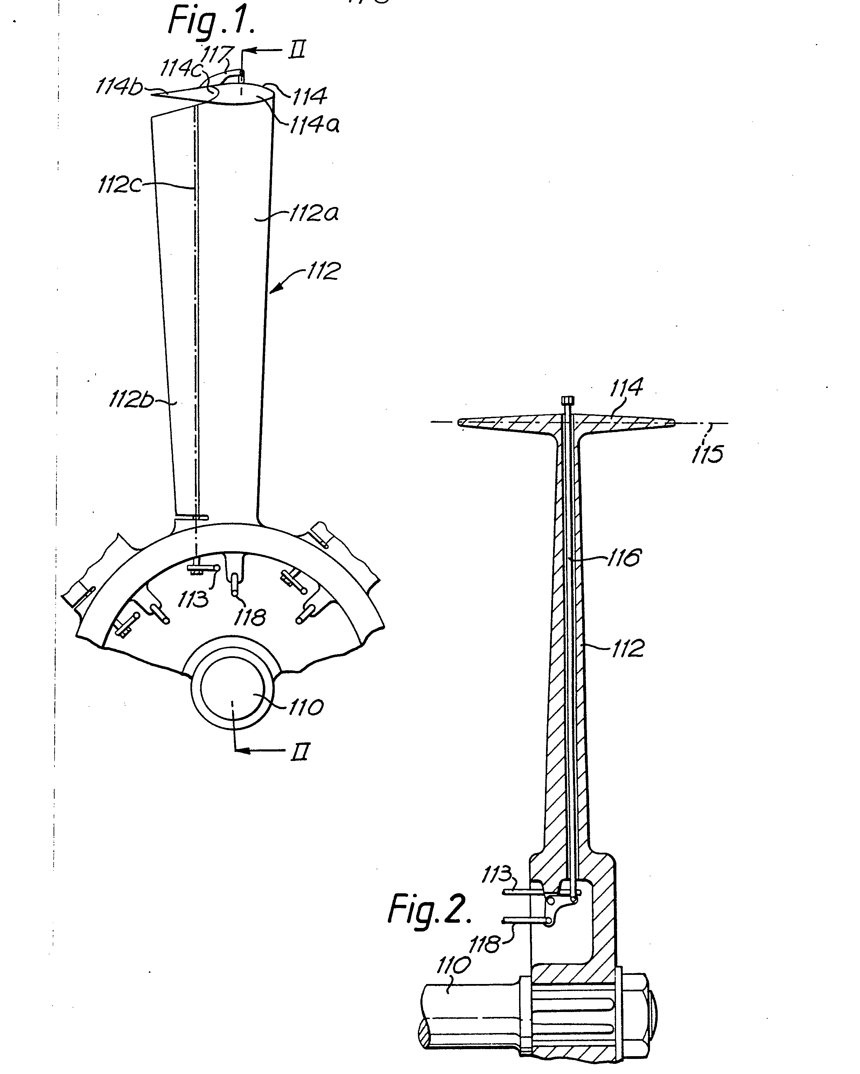

A rotor (Figs 1 and 2) has a driving axle 110 connecting driving means (not shown) to a hub 111 on which are mounted a plurality of fan blades of which one is shown at 112. Each fan blade 112 has a fixed incidence portion 112a and a fan flap 112b rotatable about a hinge 112c. Each flap 112b is connected to an actuator rod 113 which is connected to a fan flap angle control (not shown).

On the tip of each fixed incidence portion 112a is secured a fixed incidence portion 114a of an aerofoil 114 which has a spanwise axis 115 substantially parallel to the driving axle 110. Each fixed incidence portion 114a carries an aerofoil flap 114b rotatable about a hinge 114c. An aerofoil flap actuator rod 116 is connected to a lever 117 on each aerofoil flap 114b and passes through the associated fan blade 112 to an aerofoil flap actuator rod 118. Each aerofoil flap actuator rod 118 is connected to an aerofoil flap angle control (not shown).

Operations of the fan flap angle control and aerofoil flap angle control is such that all fan flaps and all aerofoil flaps respectively are moved equally and as a unit.

In operation the rotor is driven by the axle 110 and develops a thrust which is dependent on the rotational speed, fan blade incidence and aerofoil incidence and which can be varied by varying any of these three parameters.

It will be apparent that the above described embodiment of the invention is comparatively complicated. Simpler embodiments might have fixed incidence fan blades 112 without flaps, fixed incidence aerofoils 114 without flaps, or both. Also all moving fan blades 112 or aerofoils 114 might be used instead of the flapped blades 112 and flapped aerofoils 114 described.

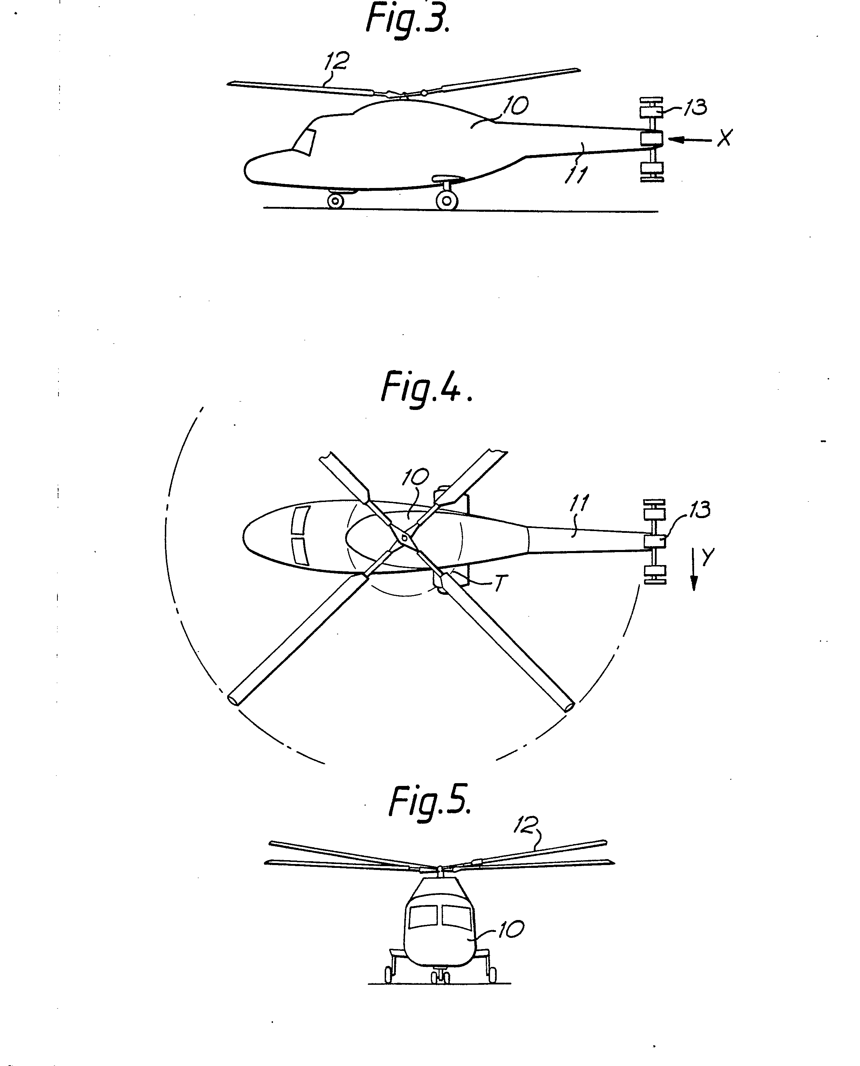

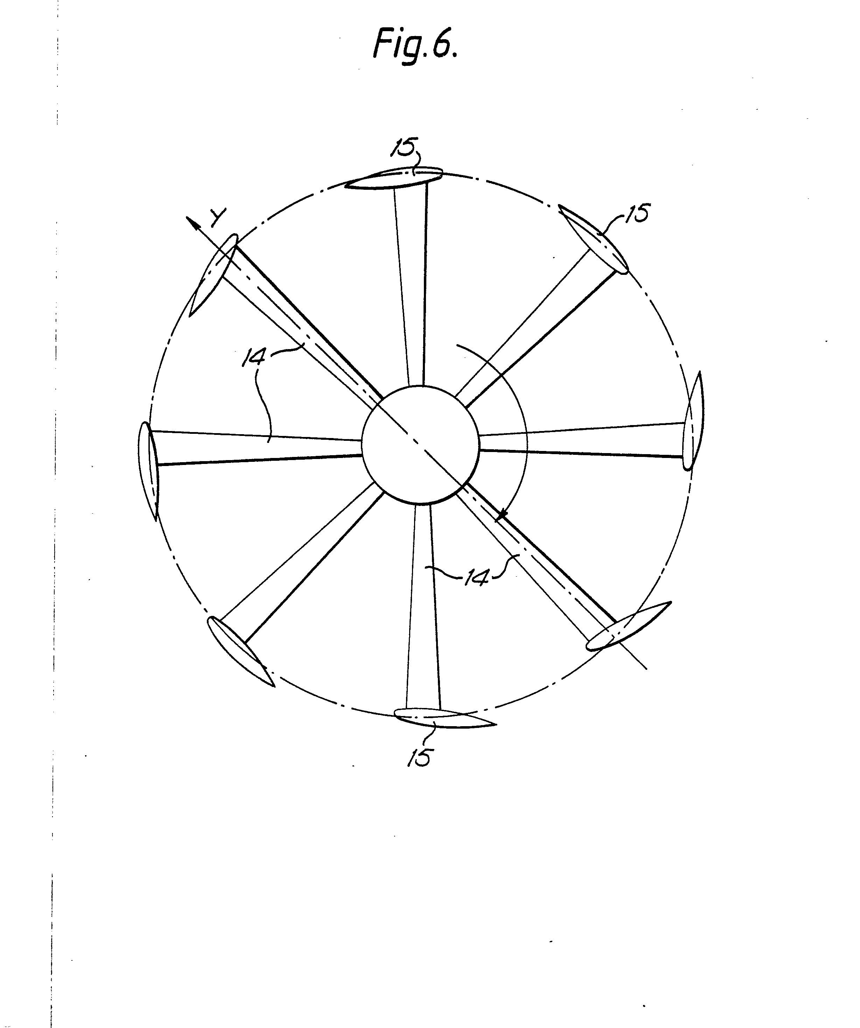

Embodiments of the invention providing vectored thrust and suitable for use in the control of helicopters are illustrated in Figures 3 to 16. A helicopter (Figures 3 to 5) has a fuselage 10, tail beam 11 and lift rotor 12. Situated at the rear of the tail beam 11 is a vectored thrust rotor 13 rotatable about an axis substantially parallel to longitudinal axis of the helicopter, and including (see Figure 6) a number of fan blades such as those shown at 14 on the tip of each of which is an aerofoil 15 having a spanwise axis substantially parallel to the rotor axis. The

6

effective angles of attack of the aerofoils 15 are cyclically altered to provide a thrust vector Y in the plane of the rotor. Referring back to Figure 4 a component of the thrust vector Y can be used to offset torque caused by driving the lift rotor 12. However, in contrast to a conventional tail rotor, components of the thrust vector Y can also be used to offset other torques, such as the gyroscopic torques which arise during manoeuvring, and to control the attitude of the helicopter. The fan blades 14 of the rotor will also be producing a thrust, which will ally be in a direction where it contributes to the forward thrust on the helicopter.

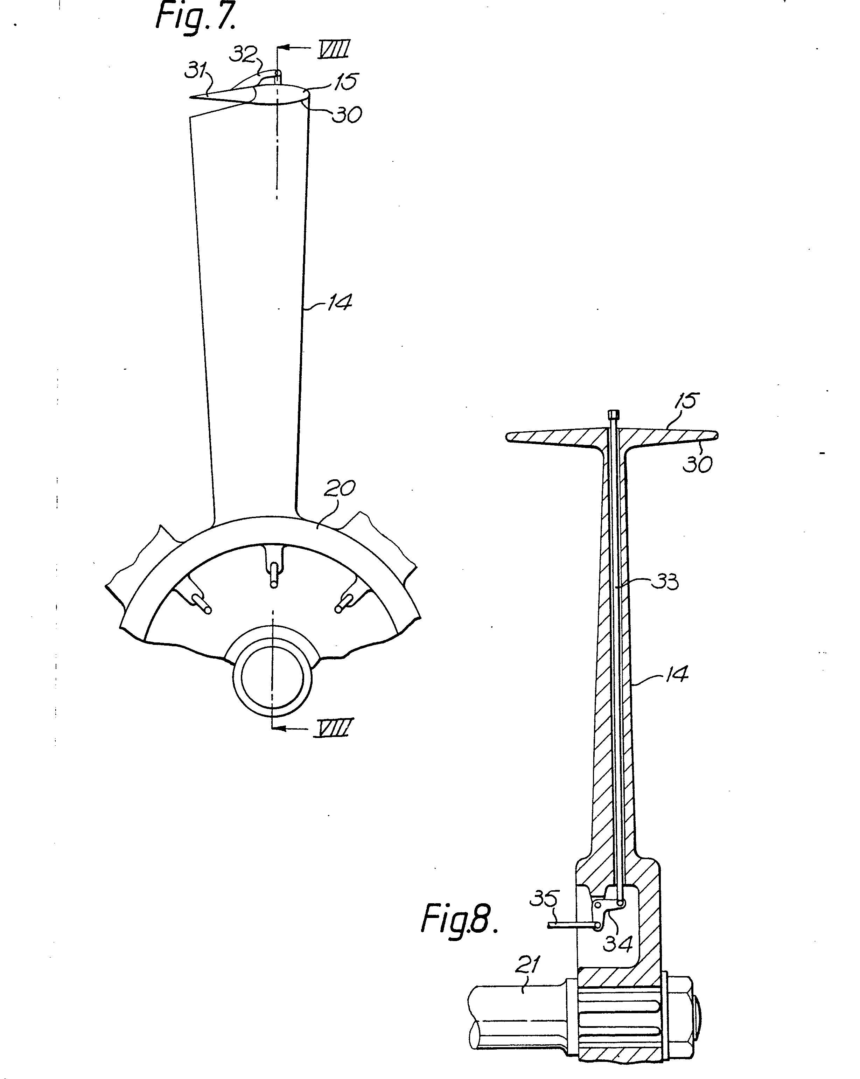

In one embodiment of the invention (Figures 7 and 8) fixed fan blades 14 (of which one is shown in these Figures) mounted on a hub 20 driven by a rotor drive shaft 21 each has at its tip an aerofoil 15. Each aerofoil 15 has a first portion 30 secured to the fan blade 14 at a fixed angle of attack, and a movable control portion 31. The effective angle of attack of the aerofoil 15 is varied by movement of the control 31 via a lever 32 which is connected via a rod 33 which passes through the fan blade 14, a crank 34 and actuator rod 35 to a swash plate (not shown) which is coaxial with the drive shaft.

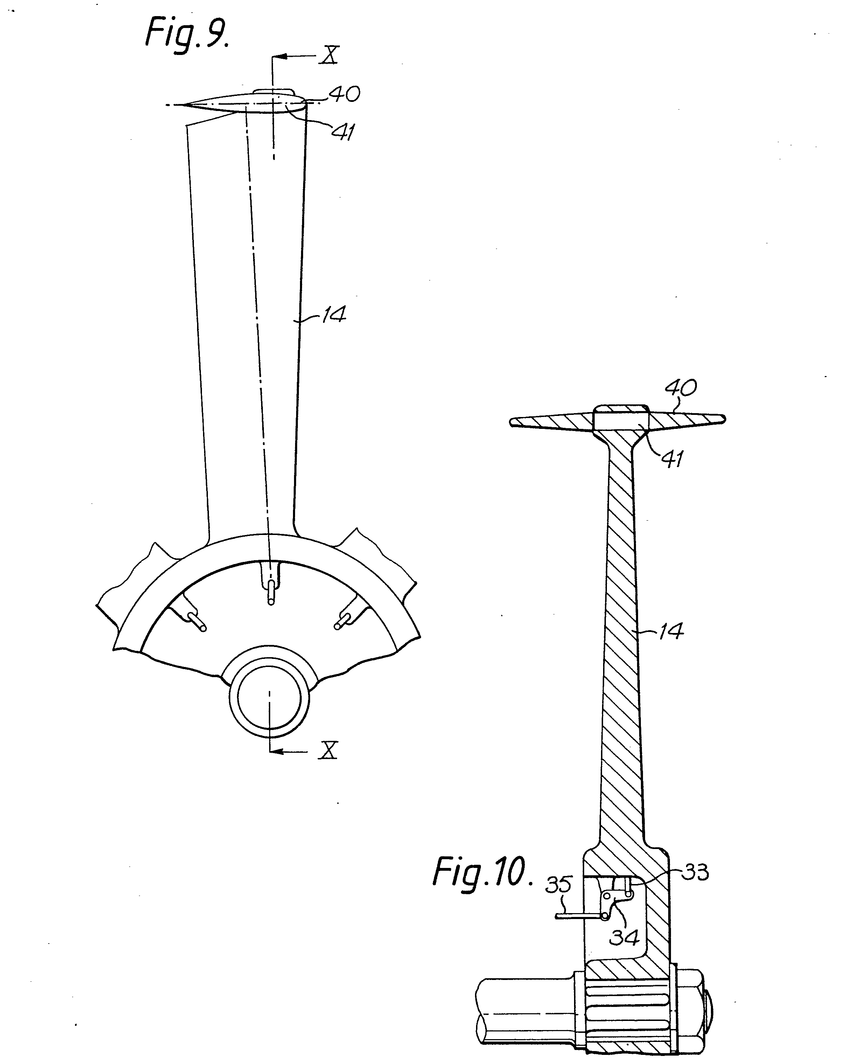

In an alternative arrangement (Figures 9 and 10) an all moving aerofoil 40 rotatable about a hinge 41 is mounted on each fan blade 14, and moved by rod 33 and crank 34 and actuator rod 35 from a swash plate (not shown).

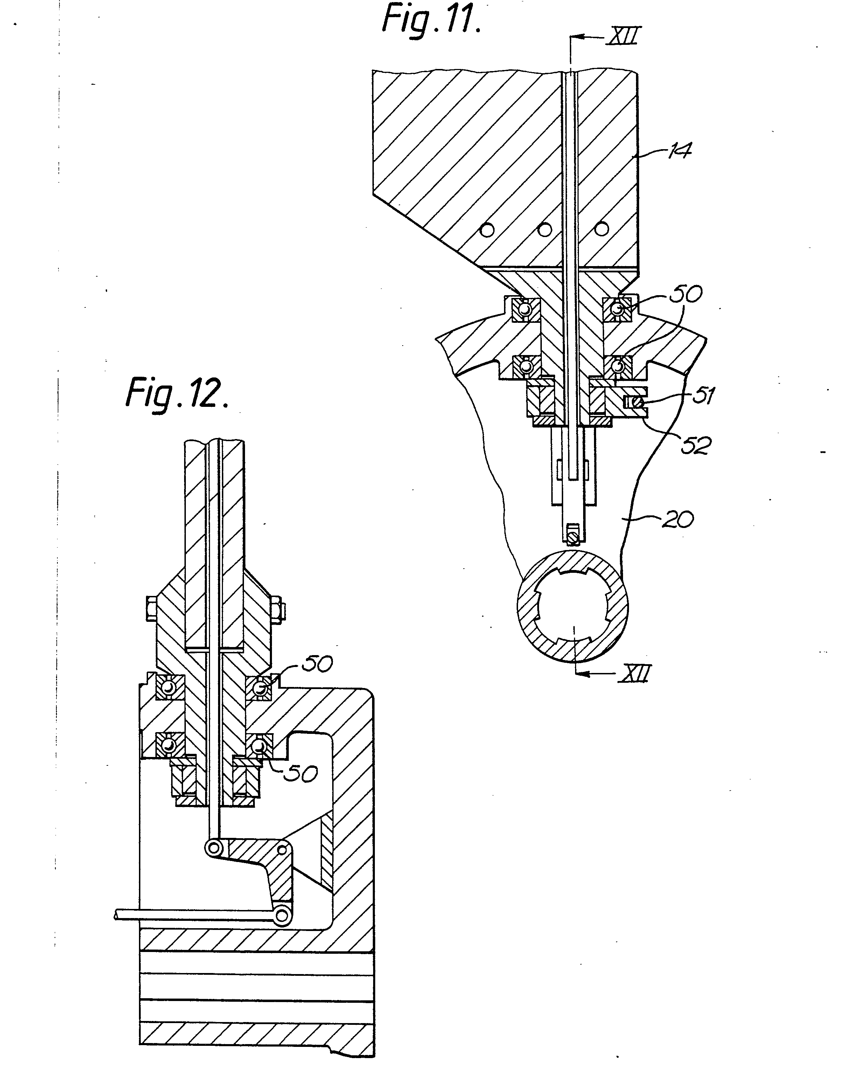

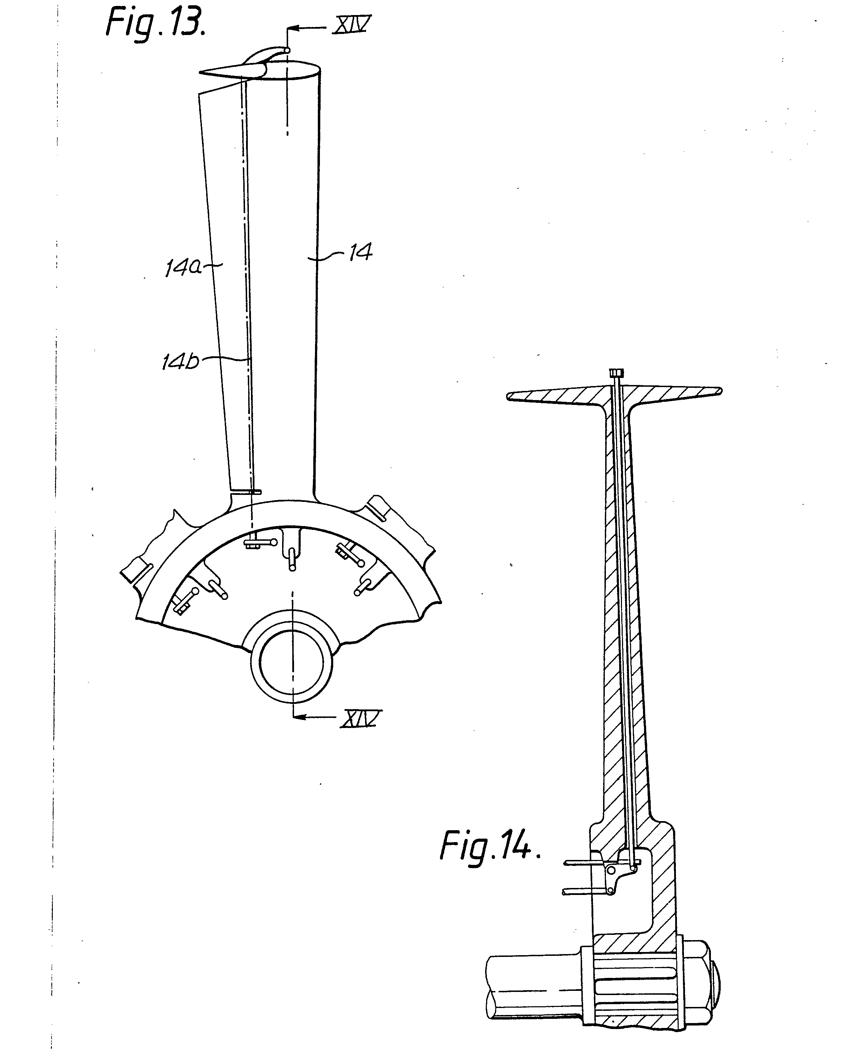

In an embodiment having a variable pitch fan blade 14 (Figures 11 and 12) each fan blade is rotatably mounted in bearings 50 on the hub 20. The angle of attack of fan blades 14 is varied by movement of a fan pitch actuator rod 51 which connects all the fan blades and acts on a lever 52 secured to the root of each fan blade 14. The angle of attack of the aerofoils (not shown in Figures 11 and 12) are varied in a manner identical to that described with reference to Figures 7 and 8, and 9 and 10. As an alternative to varying the angle of each fan blade 14 the effective angle of attack of each blade 14 may be varied (Figures 13 and 14) by a fan control 14a rotatable about a hinge 14b at the trailing edge of each fan blade 14.

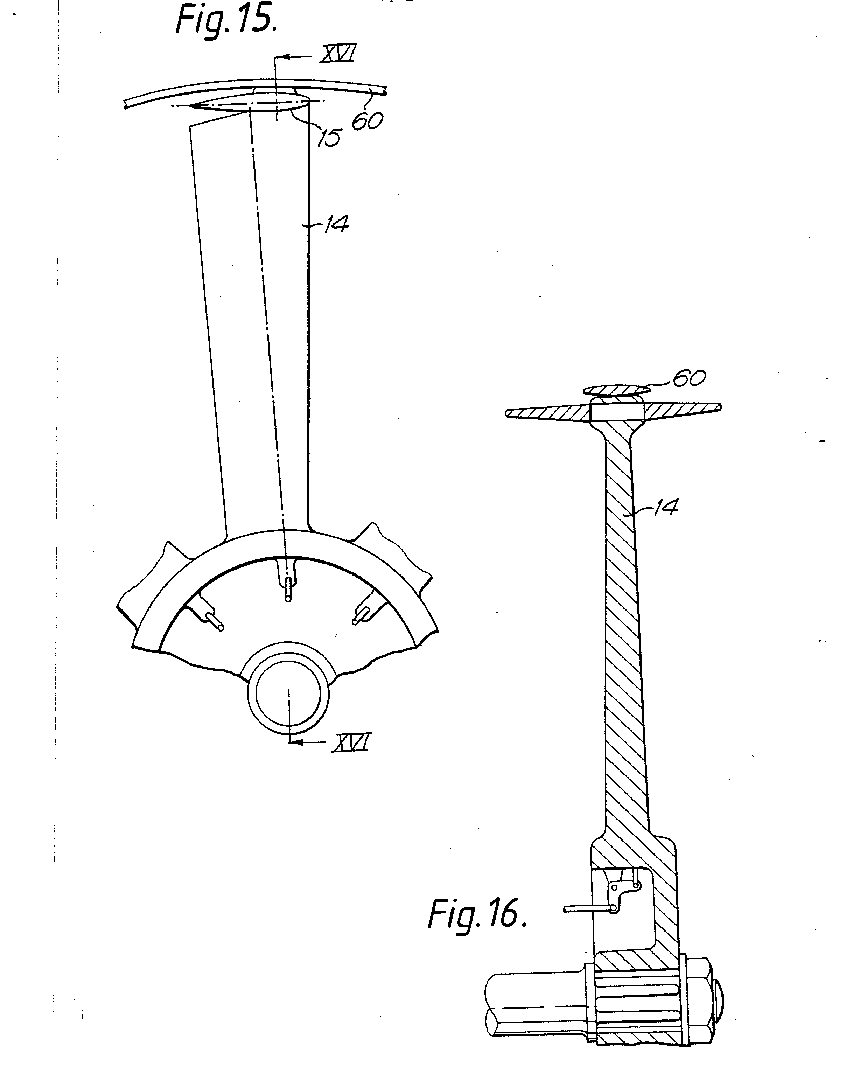

In some cases where a multiplicity of fan blades 14 are used the assembly may be strengthened (Figures 15 and 16) by the use of a tip ring 60 secured to each fan blade 14 radially outboard of the aerofoils 15. Such an arrangement will, of course, have weight and drag penalties.

Whilst the helicopter illustrated in Figures 3 to 5 is shown as having only a rotor 13 at the rear of the tail boom 11 such a rotor may be used in conjunction with conventional rudder and horizontal tailplanes. With the latter arrangement the size of the rotor 13 might be expected to be less than in the case where only a rotor 13 is used.

It will be realised that in the above described embodiments the mechanisms for varying the angles of attacks of the aerofoils 15, and of fan blades 14 are of a type that are extremely common in most forms of engineering (particularly for the control of helicopter main and tail rotors), and in consequence have not been described in detail.  Many alternative forms of mechanism will be readily apparent to those skilled in the art.  Control of the various angles of attack will usually be by an active control system of the type being introduced for the control systems of many modern aircraft.  When an active control system is used it will be possible, and may in some instances be desirable, to vary the angles of incidence of the aerofoils 15 individually.

It will be realised that whilst the invention has been described as in use on a helicopter vectored thrust rotors as described may be used in other environments, for example in the nautical environment, and for hovercraft.  A thrust rotor according to the invention can also be used on a fixed wing aircraft to provide both motive power and longitudinal and lateral stability.  On a fixed wing aircraft the rotor would preferably be installed in a manner analogous to a pusher propeller.

A device as described above with reference to the accompanying drawings might be expected to suffer from a harmonic thrust component superimposed on the required steady thrust component. It can, however, be shown that provided there is symmetrical array having more than two aerofoils 15 the harmonic thrust component is eliminated.

The planform of the aerofoils 15 illustrated in the accompanying drawings is rectangular.  This shape is suitable for rotors having comparatively low tip speeds.  The aerofoils 15 will generally be designed for optimum performance and, depending

9

on the planned tip operating conditions other planforms, such as tapered, swept forward or swept back, may be advantageous.

0018114

1

WHAT IS CLAIMED IS:

Claim 1. A thrust device including a rotor (13) rotatable about a rotor axis and having a plurality of fan blades (14), characterised in that at least some of the fan baldes (14) each carries at its tip an aerofoil (15) having a spanwise axis substantially parallel to the rotor axis.

Claim 2. A thrust device as claimed in Claim 1 characterised in that each fan blade (14) has an aerofoil (15) at its tip.

Claim 3. A thrust device as claimed in Claim 1 or in Claim 2 characterised in having more than two aerofoils (15) symmetrically arranged.

Claim 4. A thrust device as claimed in any one of Claims 1 to 3 characterised in that the incidence of each aerofoil (15) is fixed.

Claim 5. A thrust device as claimed in any one of Claims 1 to 3 characterised in that the incidence of each aerofoil (15) is variable.

Claim 6. A thrust device as claimed in Claim 5 characterised in that the incidences are collectively variable.

Claim 7. A thrust device as claimed in Claim 5 wherein the incidences are cyclically variable.

Claim 8. A thrust device as claimed in any one of Claims 5 to 7 characterised in that the incidence of each aerofoil (15) is variable by movement of the whole aerofoil.

Claim 9. A thrust device as claimed in any one of Claims 5 to 7 characterised in that each aerofoil (15) includes a movable control portion (31) and has its incidence varied by movement of the control portion.

Claim 10. A thrust device as claimed in any one of Claims 1 to 9 characterised in that the incidence of each fan blade (14) is variable.

0018114

2

Claim 11. A thrust device as claimed in Claim 10 characterised in that the incidence of each fan blade (14) is varied by movement of the fan blade.

Claim 12. A thrust device as claimed in Claim 10 characterised in that each fan blade (14) includes a fan control (14a) and has its incidence varied by movement of the fan control.

Claim 13. A thrust device substantially as herein described with reference to Figures 1, 2 and 6 to 16 of the accompanying drawings.

Claim 14. A helicopter characterised in that it includes a thrust device as claimed in any one of Claims 1 to 13.

Claim 15. A helicopter as claimed in Claim 14 characterised in that the thrust device is controlled by an automatic control system.

Claim 16. A helicopter substantially as described with reference to Figures 3 to 5 of the accompanying drawings.

Fig.1.

1/8

0018114

Fig.2.

0018114

## Fig.3.

12

10

11

13

← X

## Fig.4.

10

11

13

↓ Y

T

## Fig.5.

12

10

0018114

Fig.6.

Fig. 7.

VIII

31 32 15 30

14

20

VIII

Fig. 8.

15

30

33

14

35

34

21

0018114

Fig.9.

X

40
41

14

X

40
41

14

Fig.10.

35
33
34

**Fig.11.**

**Fig.12.**

0018114

Fig.13.

XIV

14a

14

14b

XIV

Fig.14.

0018114

Fig.15.

Fig.16.

## DOCUMENTS CONSIDERED TO BE RELEVANT

| Category | Citation of document with indication, where appropriate, of relevant passages | Relevant to claim |
|---|---|---|
| X | <u>US - A - 2 845 132</u> (HECKMAN)<br>  * Column 1, lines 55-57; column 2, lines 29-39; claim 1; column 3, lines 7-14 *<br><br>-- | 1,2,5, 7,8 10, 11,14 |
| X | <u>US - A - 3 166 129</u> (BRYAN)<br>  * Column 1, lines 15-52 *<br><br>-- | 1,3-8, 10,11, 14 |
| X | <u>DE - C - 588 392</u> (NEUMEIER)<br>  * Lines 18-24, 25-33 *<br><br>-- | 9,12 |
|  | <u>DE - C - 888 959</u> (LUX)<br>  * Lines 33-41 *<br><br>---- | 1 |

**CLASSIFICATION OF THE APPLICATION (Int. Cl. 3)**

B 64 C 11/00

**TECHNICAL FIELDS SEARCHED (Int.Cl. 3)**

B 64 C 11/00
B 64 C 27/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 07-07-1980 | HAUGLUSTAINE |

EPO Form 1503.1  06.78